# EUROPÄISCHE PATENTSCHRIFT

(11) **EP 3 673 563 B1**
(45) Veröffentlichungstag und Bekanntmachung des Hinweises auf die Patenterteilung: **14.12.2022**
(21) Anmeldenummer: 18737535.7
(22) Anmeldetag: 27.06.2018
(51) Int. Cl.: H02J 50/12, H02J 50/90, H02J 50/60

(54) **VERFAHREN ZUR DRAHTLOSEN ENERGIEÜBERTRAGUNG VON EINER ENERGIESENDEVORRICHTUNG ZU EINEM VERBRAUCHER SOWIE DRAHTLOSE ENERGIESENDEVORRICHTUNG ZUR DURCHFÜHRUNG DES VERFAHRENS**
METHOD FOR WIRELESSLY TRANSMITTING ENERGY FROM ONE ENERGY TRANSMITTING DEVICE TO A LOAD, AND WIRELESS ENERGY TRANSMITTING DEVICE FOR CARRYING OUT THE METHOD
PROCÉDÉ DE TRANSFERT D'ÉNERGIE SANS FIL ENTRE UN DISPOSITIF ÉMETTEUR D'ÉNERGIE ET UN CONSOMMATEUR, ET DISPOSITIF ÉMETTEUR D'ÉNERGIE SANS FIL POUR LA MISE EN OEUVRE DUDIT PROCÉDÉ

(30) Priorität: 24.08.2017 DE 102017214849
(43) Veröffentlichungstag der Anmeldung: 01.07.2020
(73) Patentinhaber: Robert Bosch GmbH, 70442 Stuttgart (DE)
(72) Erfinder: GONDA, Martin, 77815 Buehl (DE); MACK, Juergen, 73035 Goeppingen (DE); KRUPEZEVIC, Dragan, 70565 Stuttgart (DE)
(86) Internationale Anmeldenummer: PCT/EP2018/067220
(87) Internationale Veröffentlichungsnummer: WO 2019/037926

(56) Entgegenhaltungen:
- WO-A1-2016/050424
- DE-A1-102012 112 953
- DE-A1-102013 212 588

## Beschreibung

Die Erfindung betrifft ein Verfahren zur drahtlosen, insbesondere induktiven, Energieübertragung von einer Energiesendevorrichtung zu einem Verbraucher, wobei in zumindest einem Verfahrensschritt zumindest eine Resonanzfrequenz und eine Ist-Güte der drahtlosen Energieübertragung erfasst werden und in zumindest einem weiteren Verfahrensschritt eine Entscheidung zur Unterbrechung der Energieübertragung von der Energiesendevorrichtung zu dem Verbraucher für eine Fremdobjekterkennung erfolgt. Weiterhin betrifft die Erfindung eine drahtlose Energiesendevorrichtung, insbesondere eine induktive Ladevorrichtung, zur Durchführung des erfindungsgemäßen Verfahrens.

### Stand der Technik

Es ist bekannt, akkubetriebene Handgeräte wie Zahnbürsten, Mobilfunkgeräte, oder Computer sowie elektrisch betriebene Handwerkzeuge, Messgeräte, Gartengeräte oder dergleichen drahtlos mit Energie zu versorgen. Zukünftig werden auch die Energiespeicher von elektrisch angetriebenen Fahrzeuge, wie eBikes, eScooter oder PKW, Busse, LKW, etc. drahtlos geladen. Ein weiterer Anwendungsfall für die drahtlose Energieübertragung sind Geräte, die ohne weiteren Energiespeicher oder nur mit kleinem Energiespeicher beispielsweise in Form von Kondensatoren ausgestattet sind und die die drahtlos übertragene Energie direkt verbrauchen. Zu derartigen Geräten gehören Küchengeräte, wie Mixer, Töpfe, etc. die direkt auf einem Induktionskochfeld betreibbar sind, aber zunehmend auch Notebooks, Leuchten, Lüfter oder dergleichen. In der Regel erfolgt die drahtlose Energieübertragung mittels eines elektromagnetisches Felds von einer primärseitigen Energieversorgungseinrichtung zu einem sekundärseitigen Verbraucher, wobei die Primärseite und die Sekundärseite jeweils mindestens eine Spule aufweisen, die in geringem Abstand zueinander positionierbar sind und so zusammen im Wesentlichen einen Transformator bilden.

Gerät ein elektrisch leitfähiges Fremdobjekt in den Bereich des elektromagnetischen Feldes der Spulen, können sich jedoch Wirbelströme bilden, die das Fremdobjekt erwärmen. Ist das Fremdobjekt magnetisierbar, so kann dieses auch durch Ummagnetisierungs- bzw. Hystereseverluste erwärmt werden. Die Erwärmung kann beträchtlich sein, sodass eine Betriebssicherheit des drahtlosen Energieübertragungssystems nicht mehr gewährleistbar ist. Außerdem kann das Fremdobjekt Energie aus dem elektromagnetischen Feld entziehen, sodass die Energieübertragung zum Verbraucher gestört ist.

Aus der DE 10 2012 205 693 A1 ist ein induktives Ladesystem bekannt mit einer Induktionsladevorrichtung zur drahtlosen Energieübertragung zu einer Akkuvorrichtung, wobei ein Resonanztransformator der Induktionsladevorrichtung mit einer Ladespule ein elektromagnetisches Wechselfeld erzeugt. Eine Bestimmungseinrichtung ist zur Erfassung eines Objekts im Bereich der Ladespule in Abhängigkeit eines elektrischen Parameters am Resonanztransformator vorgesehen. Außerdem umfasst die Induktionsladevorrichtung eine Steuer- und Regeleinheit zur Veränderung eines Gütefaktors des Resonanztransformators, um eine Energieübertragung bei einem niedrigen Gütefaktor und eine Erfassung des Objekts bei einem hohen Gütefaktor zu erlauben.

Aus der DE 10 2013 212 588 ist ferner ein Verfahren zur Fremdobjekterkennung für eine Induktionsladevorrichtung bekannt, bei dem eine Resonanzfrequenz und eine dazu gehörige Ist-Güte einer Schwingkreisschaltung der Induktionsladevorrichtung erfasst werden und nachfolgend die Ist-Güte mit einer von der Resonanzfrequenz abhängigen Soll-Güte verglichen wird. Anhand eines definierten Soll-Gütebereichs wird dann eine Entscheidung über das Vorhandensein eines Fremdobjekts getroffen.

Es ist Aufgabe der Erfindung, die aus dem Stand der Technik bekannten Verfahren zur Fremdobjekterkennung für eine drahtlose Energieübertragungsvorrichtung sowie die entsprechenden drahtlosen Energieübertragungsvorrichtungen weiter zu verbessern und die Energieübertragung weiter zu optimieren.

### Vorteile der Erfindung

Erfindungsgemäß ist vorgesehen, dass der Entscheidung zur Durchführung der Fremdobjekterkennung eine Hysterese für die Grenzen der Resonanzfrequenz und der Ist-Güte zugrunde liegt. Unter einer "Hysterese" soll insbesondere ein Systemverhalten verstanden werden, bei dem eine Ausgangsgröße nicht allein von der unabhängig veränderlichen Eingangsgröße, sondern auch von dem vorherigen Zustand der Ausgangsgröße abhängt. Hierdurch kann vorteilhaft eine Durchführung der Fremdobjekterkennung derart entschieden werden, dass je nach Ausgangslage die Energieübertragung beschleunigt oder die Sicherheit durch entsprechendes Erkennen von Fehlern und/oder Fremdobjekten verbessert wird. Unterbrechungen der drahtlosen Energieübertragung aufgrund einer Reduzierung durchzuführender Fremdobjekterkennungsdurchläufe lassen sich so reduzieren, so dass in besonders vorteilhafter Weise lange Zyklen erreicht werden können, was zu einer insgesamt verkürzten Energieübertragungsdauer führt. Es kann vorteilhaft ein Beschädigungsrisiko einer drahtlosen Energieübertragungsvorrichtung, insbesondere einer drahtlosen Energiesendevorrichtung, bei der Durchführung einer Fremdobjekterkennung berücksichtigt werden.

Unter einer "drahtlosen Energiesendevorrichtung" soll insbesondere eine primärseitige Vorrichtung zum drahtlosen, insbesondere induktiven, Übertragen von Energie an einen sekundärseitigen Verbraucher, insbesondere einen wiederaufladbaren Energiespeicher, verstanden werden. Ein Beispiel für eine drahtlose Energieübertragung ist ein induktives Ladesystem für einen Akkupack einer Handwerkzeugmaschine. Die Erfindung kann jedoch auch auf die verschiedensten Arten der drahtlosen Energieübertragung sowie Energiesende- und - empfangs-vorrichtungen angewendet werden, bei denen eine Fremdobjekterkennung sinnvoll oder notwendig ist. Dies kann auch eine drahtlose Energieübertragung umfassen, die optisch, akustisch oder kapazitiv arbeitet.

Vorzugsweise weist die Energiesendevorrichtung zumindest eine Steuer- oder Regeleinheit auf, die zumindest dazu vorgesehen ist, eine drahtlose Energieübertragung zu steuern oder zu regeln. Unter einem "Verbraucher" soll dabei insbesondere eine Vorrichtung zum temporären Speichern und/oder verbrauchen elektrischer Energie, beispielsweise ein Akkumulator oder ein direkt mit der drahtlos übertragenen, elektrischen Energie versorgtes Gerät, wie ein Radio, eine Leuchte, ein Mixer oder dergleichen, verstanden werden. Es sind verschiedene, einem Fachmann als sinnvoll erscheinende, wiederaufladbare Energiespeicher denkbar; insbesondere soll darunter jedoch ein Lithium-Ionen-Akkumulator verstanden werden.

Des Weiteren soll unter einer "Steuer- oder Regeleinheit" insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einer "Fremdobjekterkennung" soll insbesondere eine Erkennung und/oder eine Überprüfung eines Vorhandenseins von Fremdobjekten, insbesondere in einer Umgebung der drahtlosen Energiesendevorrichtung und/oder des Verbrauchers, verstanden werden. Vorzugsweise soll darunter insbesondere das Erkennen und/oder das Überprüfen eines Vorhandenseins von Fremdobjekten, die in einem Kontaktbereich zwischen der drahtlosen Energiesendevorrichtung und dem Verbraucher angeordnet sind und während einer drahtlosen Energieübertragung zu deren Beeinträchtigung führen können, verstanden werden. Unter "Fremdobjekten" sollen dabei insbesondere metallische und/oder magnetische Bauteile, Teilstücke oder andere Objekte verstanden werden.

Gemäß der Erfindung ist vorgesehen, dass die Hysterese aus zumindest drei Hystereseregionen für die Grenzen der Resonanzfrequenz und der Ist-Güte besteht. Dabei ist eine erste Hystereseregion derart definiert, dass innerhalb ihrer Grenzen für die Resonanzfrequenz und die Ist-Güte keine Fremdobjekterkennung durchgeführt werden muss. Eine zweite Hystereseregion ist derart definiert, dass innerhalb ihrer Grenzen für die Resonanzfrequenz und die Ist-Güte eine Fremdobjekterkennung in Abhängigkeit von einem Übergang von der ersten Hystereseregion in die zweite Hystereseregion oder von einer dritten Hystereseregion in die zweite Hystereseregion durchgeführt wird.

In einer weiteren Ausgestaltung des erfindungsgemäßen Verfahrens wird die Hysterese bzw. mindestens eine der Hystereseregionen abhängig von einem Betriebsmodus der Energiesendevorrichtung und/oder einem Betriebsmodus-Wechsel der Energiesendevorrichtung angepasst. So ist es möglich, die Hysterese bzw. die zumindest eine Hystereseregion in einem Energieübertragungsbetrieb der Energiesendevorrichtung gegenüber einem Standby-Betrieb zu verringern, um eine größere Entscheidungsgenauigkeit bei etwaigen Übergängen von einem zum nächsten Zyklus der drahtlosen Energieübertragung zu erzielen und etwaige Fremdobjekte schneller erkennen zu können.

Die Hysterese bzw. mindestens eine der Hystereseregionen kann abhängig von einer Energieübertragungskenngröße der drahtlosen Energieübertragung angepasst werden. Dabei soll unter einer "Energieübertragungskenngröße" insbesondere eine Kenngröße verstanden werden, welche während der drahtlosen Energieübertragung einen Energiefluss, im Falle der induktiven Energieübertragung insbesondere einen elektromagnetischen Energiefluss, zwischen der Energiesendevorrichtung und dem Verbraucher bevorzugt quantitativ charakterisiert.

So kann die Energieübertragungskenngröße eine in der Energiesendevorrichtung und/oder dem Verbraucher gemessene Vibration bzw. ein Vibrationsgradient, eine Geschwindigkeit und/oder eine Beschleunigung sein, wobei die Hysterese bzw. die zumindest eine Hystereseregion mit steigender Vibration, Geschwindigkeit, Beschleunigung und/oder steigendem Vibrationsgradienten vergrößert wird. Auf diese Weise lassen sich zu häufige Wechsel zwischen einer aktivierten und einer deaktivierten Fremdobjekterkennung von einem zum nächsten Zyklus der drahtlosen Energieübertragung, z.B. für einen induktiven Ladevorgang eines Ackupacks einer Handwerkzeugmaschine in einem fahrenden Fahrzeug, reduzieren.

Alternativ oder ergänzend kann die Energieübertragungskenngröße eine zwischen der Energiesendevorrichtung und dem Verbraucher übertragene elektrische Leistung bzw. ein Leistungsgradient sein, wobei die Hysterese bzw. die zumindest eine Hystereseregion mit steigender Leistung bzw. steigendem Leistungsgradienten verringert wird. Mit Vorteil kann dadurch die Entscheidungsgenauigkeit für die Fremdobjekterkennung erhöht werden.

Auch ist denkbar, dass die Energieübertragungskenngröße eine Temperatur bzw. ein Temperaturgradient ist, wobei die Hysterese bzw. die zumindest eine Hystereseregion mit steigender Temperatur bzw. steigendem Temperaturgradienten verringert wird, um die Entscheidungsgenauigkeit für die Fremdobjekterkennung zu erhöhen.

Eine weitere Alternative kann eine als ein benötigter Energiebedarf des Verbrauchers und/oder ein Ladezustand des als wiederaufladbaren Energiespeicher ausgebildeten Verbrauchers ausgebildete Energieübertragungskenngröße sein. Dabei wird die Hysterese bzw. die zumindest eine Hystereseregion bei größerem Energiebedarf verringert und mit zunehmendem Ladezustand vergrößert.

Die Erfindung betrifft auch eine drahtlose Energiesendevorrichtung zur Durchführung des erfindungsgemäßen Verfahrens für einen Leistungsbereich der drahtlos zu übertragenen Energie innerhalb einer unteren Leistungsgrenze von 5 W und einer oberen Leistungsgrenze von 30 W, insbesondere 15 W. Als Beispiel für entsprechende Energiesendevorrichtungen seien hier stellvertretend Notebooks, Tablets, Smartphones, aber auch Radios, Leuchten, kleinere Mess- und Handwerkzeuggeräte etc. genannt.

Ebenso kann die Erfindung auch für drahtlose Energiesendevorrichtungen für einen Leistungsbereich der drahtlos zu übertragenen Energie innerhalb einer unteren Leistungsgrenze von 30 W und einer oberen Leistungsgrenze von 200 W, insbesondere 65 W, ausgelegt sein. Stellvertretend für diesen Leistungsbereich seien viele Motor angetriebene Geräte, wie z.B. Elektrohandwerkzeuge, wie Bohrmaschinen, Schleifgeräte, Sägen, Hobel, Schleifer, etc. oder Küchengeräte, wie Mixer, Küchenmaschinen sowie Elektrofahrzeuge, wie Elektrofahrräder, Scooter, etc. genannt.

Die Erfindung eignet sich zudem für drahtlose Energiesendevorrichtungen mit einem Leistungsbereich der drahtlos zu übertragenen Energie oberhalb einer unteren Leistungsgrenze von 200 W, insbesondere 2000 W, wie elektrisch angetriebene PKW, LKW, Busse, Gabelstapler oder dergleichen und Küchengeräte wie Elektrogrills, Kochtöpfe oder dergleichen sowie stationär betriebene Elektrowerkzeugmaschinen und Industrieanlagen.

Weitere Vorteile der Erfindung ergeben sich durch die in den abhängigen Ansprüchen angegebenen Merkmale sowie aus der Zeichnung und der nachfolgenden Beschreibung.

### Ausführungsbeispiele

### Zeichnung

Die Erfindung wird im Folgenden anhand der Figuren 1 bis 5 beispielhaft erläutert, wobei gleiche Bezugszeichen in den Figuren auf gleiche Bestandteile mit einer gleichen Funktionsweise hindeuten.

Es zeigen
- Fig. 1:: ein drahtloses Energieübertragungssystem mit einer primären Energiesendevorrichtung und einem sekundärseitigen Verbraucher in einer schematischen Darstellung,
- Fig. 2:: ein schematisches Diagramm der unterschiedlichen Arbeitsbereiche der drahtlosen Energieübertragungsvorrichtung,
- Fig. 3:: einen Programmablaufplan des Verfahrens zur drahtlosen Energieübertragung in einer schematischen Darstellung,
- Fig. 4:: einen ergänzenden Programmablaufplan des Verfahrens zur drahtlosen Energieübertragung in einer schematischen Darstellung und
- Fig. 5:: eine schematische Darstellung der erfindungsgemäßen Hysterese zur Entscheidung über die Durchführung einer nachfolgenden Fremdobjekterkennung.

### Beschreibung der Ausführungsbeispiele

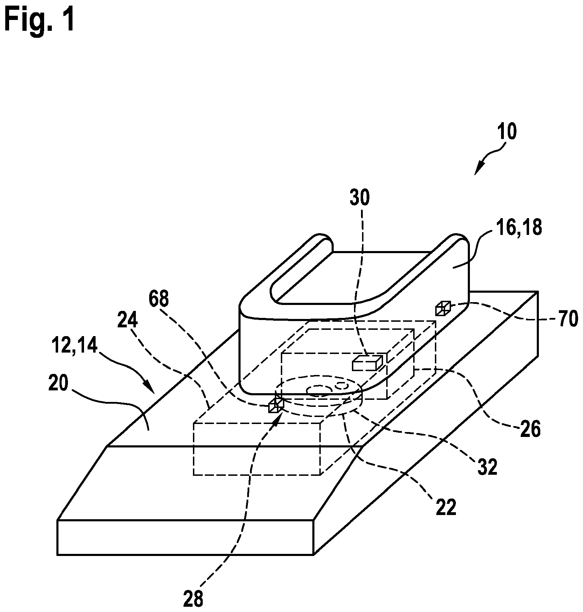

Figur 1 zeigt ein drahtloses Energieübertragungssystem 10 in Form eines induktiven Ladesystems mit einer als Ladevorrichtung 12 ausgebildeten primären Energiesendevorrichtung 14 und einem als Akkupack 16 ausgebildeten sekundärseitigen Verbraucher 18 für eine nicht gezeigte Handwerkzeugmaschine. Ebenso kann der Verbraucher 18 aber auch ein in der Handwerkzeugmaschine fest integrierter Akku sein. Wie eingangs erwähnt, ist die Erfindung jedoch nicht auf induktive Ladesysteme für Handwerkzeugmaschinen und deren Akkus bzw. Akkupacks eingeschränkt. Vielmehr kann sie auf die verschiedensten Arten der drahtlosen Energieübertragung sowie Energiesende- und -empfangsvorrichtungen angewendet werden, bei denen eine Fremdobjekterkennung sinnvoll oder notwendig ist. Dies kann auch eine drahtlose Energieübertragung umfassen, die optisch, akustisch oder kapazitiv arbeitet.

Figur 1 zeigt den auf einer Oberseite eines Gehäuses 20 der drahtlosen Ladevorrichtung 12 positionierten Akkupack 16. Er wird über zumindest eine in der Ladevorrichtung 12 integrierte, primärseitige Sendespule 22 und eine in dem Akkupack 16 integrierte, sekundärseitigen Empfangsspule (nicht dargestellt) des drahtlosen Energieübertragungssystems 10 geladen. Das drahtlose Energieübertragungssystem 10 weist dazu eine primärseitige Elektronikeinheit 24 in der Ladevorrichtung 12 auf, die ihrerseits eine Steuer- und Regeleinheit 26 sowie eine die Sendespule 22 aufweisende Schwingkreisschaltung 28 umfasst.

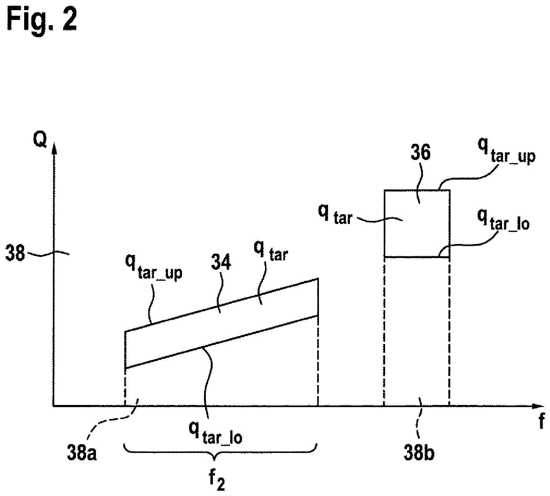

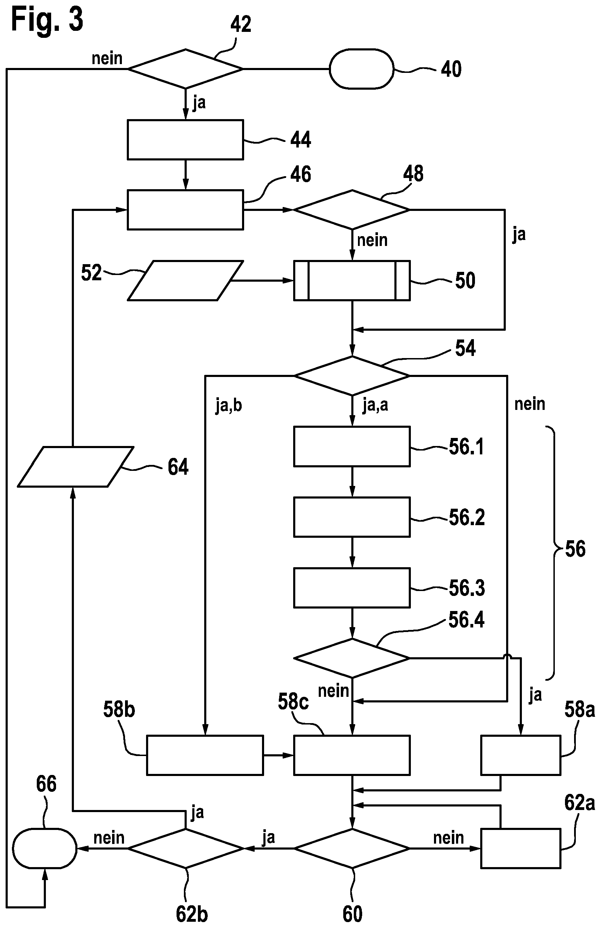

Die Steuer- und Regeleinheit 26 des drahtlosen Energieübertragungssystems 10 ist dazu vorgesehen, eine Resonanzfrequenz fᵣₑₛ und eine dazu gehörige Ist-Güte Q_{act}(fᵣₑₛ) zu bestimmen. Des Weiteren vergleicht die Steuer- und Regeleinheit 26 die Ist-Güte Q_{act} mit einer von der Resonanzfrequenz fᵣₑₛ abhängigen Soll-Güte Qₜₐᵣ(fᵣₑₛ). Zu diesem Zweck weist die Steuer- und Regeleinheit 26 einen Speicher 30 auf, der für die ermittelte Resonanzfrequenz fᵣₑₛ einen Soll-Gütebereich qₜₐᵣ mit mehreren Soll-Güten Qₜₐᵣ(fᵣₑₛ) enthält (vgl. hierzu auch die nachfolgenden Ausführungen zu den Figuren 2 und 3).

Während der drahtlosen Energieübertragung erfolgt in definierten Zeitabständen T_{cycle}, z.B. jede Sekunde, eine Fremdobjekterkennung, bei der überprüft wird, ob sich ein oder mehrere Fremdobjekte 32, die die Energieübertragung beeinträchtigen und/oder ein Sicherheitsrisiko darstellen könnten, zwischen der Energiesendevorrichtung 14 und dem Verbraucher 18 oder einfach nur auf der Energiesendevorrichtung 14 befinden. Die Fremdobjekterkennung arbeitet im Wesentlichen derart, dass zunächst die Resonanzfrequenz fᵣₑₛ und die dazu gehörige Ist-Güte Q_{act}(fᵣₑₛ) bestimmt werden und nachfolgend die Ist-Güte Q_{act}(fᵣₑₛ) mit der von der Resonanzfrequenz fᵣₑₛ abhängigen Soll-Güte Qₜₐᵣ(fᵣₑₛ) verglichen wird. Abschließend erfolgt anhand des definierten Soll-Gütebereichs qₜₐᵣ eine Entscheidung über den Betriebszustand des drahtlosen Energieübertragungssystems 10 bzw. der Energiesendevorrichtung 14.

Die Fremdobjekterkennung wird mit einer Anregespannung der primärseitigen Sendespule 22 der Energiesendevorrichtung 14 von weniger als 10 V, vorzugsweise zwischen 2,5 V und 5 V, durchgeführt. Dadurch kann die Fremdobjekterkennung mit einer vernachlässigbaren Übertragungsleistung erfolgen, so dass eine Energieübertragung zum Verbraucher vermieden und eine daraus resultierende Fehlmessung der Ist-Güte Q_{act}(fᵣₑₛ) verhindert werden kann. Auch sendet der Verbraucher 18 auf diese Weise keine "fehlerhaften" Datenwerte an die Energiesendevorrichtung 14, wie z.B. einen nicht korrekten Ladestatus eines aufzuladenden Akkumulators, die eine nachfolgende Fremdobjekterkennung verfälschen könnten.

Figur 2 zeigt die im Speicher 30 der Steuer- und Regeleinheit 26 abgelegten Soll-Gütebereiche qₜₐᵣ in Form eines schematischen Diagramms, bei dem auf der Abszisse die Resonanzfrequenz fᵣₑₛ und auf der Ordinate die Güte Q aufgetragen ist. Das Diagramm ist in drei Bereiche 34, 36, 38 (38a, 38b) aufgeteilt. Ein erster Bereich 34 definiert einen Soll-Gütebereich qₜₐᵣ für einen Betrieb mit dem Verbraucher 18. Liegt die Ist-Güte Q_{act}(fᵣₑₛ) zwischen einer oberen Grenze q_{tar_up} und einer unteren Grenze q_{tar_lo} des ersten Bereichs 34, wird davon ausgegangen, dass sich kein die Energieübertragung beeinflussendes Fremdobjekt 32 auf der drahtlosen Energiesendevorrichtung 14 befindet. Ferner wird in diesem Bereich von einer drahtlosen Energieübertragung von der Energiesendevorrichtung 14 zum Verbraucher 18 ausgegangen. Ein zweiter Bereich 36 definiert einen Soll-Gütebereich qₜₐᵣ für einen Standby-Betrieb ohne aufliegenden Verbraucher 18. Liegt die Ist-Güte Q_{act}(fᵣₑₛ) zwischen der oberen Grenze q_{tar_up} und der unteren Grenze q_{tar_lo} des zweiten Bereichs 36, wird davon ausgegangen, dass sich weder ein Fremdobjekt 32 noch ein Verbraucher 18 auf der drahtlosen Energiesendevorrichtung 14 befindet.

Ein zwei Teilbereiche 38a, 38b aufweisender dritter Bereich 38 ist von einem Fehlerbereich gebildet. Grundsätzlich kann ein Fehler sowohl in dem drahtlosen Energieübertragungssystem 10, in der Energiesendevorrichtung 14, in dem Verbraucher 18 als auch in einer Umgebung des Energieübertragungssystem 10 liegen. Ein erster Teilbereich 38a ist bezogen auf die Güte Q unterhalb der unteren Grenze q_{tar_lo} des ersten Bereichs 34 und ein zweiter Teilbereich 38b unterhalb der unteren Grenze q_{tar_lo} des zweiten Bereichs 36 angeordnet. Liegt die Ist-Güte Q_{act}(fᵣₑₛ) innerhalb des ersten Teilbereichs 38a, wird davon ausgegangen, dass sich während der Energieübertragung mindestens ein Fremdobjekt 32 in einem diese beeinflussenden Bereich auf der Energiesendevorrichtung 14 oder zwischen der Energiesendevorrichtung 14 und dem Verbraucher 18 befindet. Auch kann davon ausgegangen werden, dass ein beliebiger Fehler vorliegt, oder dass der Verbraucher 18 derart ungünstig auf der drahtlosen Energiesendevorrichtung 14 positioniert ist, dass eine Energieübertragung nicht oder nur sehr eingeschränkt möglich ist. Liegt die Ist-Güte Q_{act}(fᵣₑₛ) innerhalb des zweiten Teilbereichs 38b, wird davon ausgegangen, dass sich während des Standby-Betriebs mindestens ein Fremdobjekt 32 auf der drahtlosen Energiesendevorrichtung 14 befindet.

Für den Verlauf der Ist-Güte Q_{act} gilt folgender in Figur 2 zu erkennender, nichtlinearer Zusammenhang. Vergrößert sich der Abstand zwischen dem Verbraucher 18 und der Energiesendevorrichtung 14, so steigen sowohl die Resonanzfrequenz fᵣₑₛ als auch die Ist-Güte Q_{act}(fᵣₑₛ) an. Entsprechendes ist zu beobachten, wenn der Verbraucher 18 unabhängig von der Richtung auf der Oberfläche der Energiesendevorrichtung 14 außerhalb ihrer optimalen Position - dem Zentrum der zumindest einen primärseitigen Sendespule 22 - verschoben bzw. positioniert wird. Diese beiden Fälle beschreiben durchaus häufig vorkommende Szenarien. So muss ein lateraler Versatz des Verbrauchers 18 zu der Energiesendevorrichtung 14 erlaubt sein, da ein Benutzer in der Regel die sekundärseitige Empfangsspule des Verbrauchers 18 nicht immer exakt mittig über die zumindest einen Sendespule 22 der Energiesendevorrichtung 14 positionieren können wird. Dies ist insbesondere dann der Fall, wenn die Energiesendevorrichtung 14 eine ebene Oberfläche ohne mechanische Führungshilfen für den Verbraucher 18 aufweist, oder wenn - wie im Falle eines zu ladenden Fahrzeugs - die Positionen der zumindest einen primärseitigen Sendespule 22 und/oder der zumindest einen sekundärseitigen Empfangsspule nicht genau bekannt bzw. einsehbar sind. Weiterhin ist insbesondere bei einem direkten Aufsetzen des Verbrauchers 18 auf die Energiesendevorrichtung 14 auch ein vertikales Verkanten infolge von Fremdobjekten 32 zwischen dem Verbraucher 18 und der Energiesendevorrichtung 14 denkbar.

Figur 3 zeigt einen Programmablaufplan des Verfahrens zur drahtlosen Energieübertragung. Nach dem Start 40 wird im ersten Schritt 42 ein so genannter Power-On-Self-Test (POST) der Energiesendevorrichtung 14 durchgeführt. Der Start 40 kann automatisch mit dem Auflegen des Verbrauchers 18 auf die Energiesendevorrichtung 14 oder manuell durch Betätigung eines nicht gezeigten Tasters an der Energiesendevorrichtung 14 und/oder dem Verbraucher 18 erfolgen. Ist der POST in Schritt 42 erfolgreich durchlaufen worden, initialisiert die Steuer- und Regeleinheit 26 der Energiesendevorrichtung 14 die Resonanzfrequenz fᵣₑₛ, die Ist-Güte Q_{act}(fᵣₑₛ) und die Zyklusdauer T_{cycle} der nachfolgenden Verfahrensschritte in einem zweiten Schritt 44 mit fᵣₑₛ = f_{stdby}, Q_{act,n}(fᵣₑₛ) = 0 und T_{cycle} = Tₘᵢₙ, wobei f_{stdby} eine zulässige Resonanzfrequenz im Standby-Betrieb (vergleiche Figur 2) und Tₘᵢₙ eine minimale Zyklusdauer (z.B. 10 ms) beschreiben. Alternativ ist es ebenso möglich, T_{cycle} initial auf Tₘᵢₙ = 0 zu setzen.

Im nächsten Schritt 46 wird zunächst für die initialisierte Resonanzfrequenz eine Ist-Güte Q_{act,n+1}(fᵣₑₛ) gemessen und nachfolgend im vierten Schritt 48 mit der initialisierten Ist-Güte Q_{act,n}(fᵣₑₛ) verglichen. Da es unmittelbar nach dem Start des Verfahrens zur drahtlosen Energieübertragung keine Übereinstimmung zwischen der initialisierten und der gemessenen Ist-Güte gibt, folgt mit einem fünften Schritt 50 ein von der Steuer- und Regeleinheit 26 durchgeführter Teilprozess in Gestalt eines Frequenz-Durchlaufs derart, dass die Steuer- und Regeleinheit 26 eine nicht dargestellte Frequenzeinheit der primärseitigen Elektronikeinheit 24 ansteuert, wobei die Frequenzeinheit der Schwingkreisschaltung 28 vorgeschaltet ist. Dem Fachmann ist die Ansteuerung einer derartigen Schwingkreisschaltung zur Durchführung eines Frequenzdurchlaufs im Wesentlichen bekannt. Daher soll hierauf nicht näher eingegangen werden.

Unter einem "Frequenzdurchlauf" soll im Kontext des Verfahrens ein Prozess verstanden werden, bei dem in Abhängigkeit von der Resonanzfrequenz innerhalb eines definierten Frequenzbereichs nach einem lokalen Maximum einer erfassten bzw. gemessenen Ist-Güte der drahtlosen Energieübertragung gesucht wird. Ist ein derartiges lokales Maximum gefunden, wird der Frequenzumlauf in der Regel beendet, so dass nicht sämtliche Frequenzpunkte durchlaufen werden müssen.

Zur Ermittlung der Resonanzfrequenz fᵣₑₛ wird in dem fünften Schritt 50 während des Frequenzdurchlaufs eine Resonanzüberhöhung an der primärseitigen Sendespule 22 erfasst. Aus der an der Stelle der Resonanzüberhöhung ermittelten Amplitude kann dann in bekannter Weise die Ist-Güte Q_{act,n+1}(fᵣₑₛ) berechnet werden; die Stelle der Resonanzüberhöhung entspricht der ermittelten Resonanzfrequenz fᵣₑₛ. Diese beiden Werte werden nun mit den in dem Speicher 30 der Steuer- und Regeleinheit 26 hinterlegten Soll-Gütebereich qₜₐᵣ (Schritt 52, siehe auch Figur 2) in einem siebten Schritt 54 verglichen.

Liegt die Ist-Güte Q_{act,n+1}(fᵣₑₛ) zwischen der oberen und der unteren Grenze q_{tar_up}, q_{tar_lo} des ersten Bereichs 34 gemäß Figur 2, kann davon ausgegangen werden, dass sich für die anstehende drahtlose Energieübertragung kein diese beeinflussendes Fremdobjekt 32 auf der drahtlosen Energiesendevorrichtung 14 befindet, so dass das Verfahren zur drahtlosen Energieübertragung den nachfolgenden, aus vier Teilschritten 56.1, 56.2, 56.3, 56.4 bestehenden Teilprozess 56 durchläuft, in dem eine Kommunikation zwischen der Energiesendevorrichtung 14 und dem Verbraucher 18 aufgebaut und überprüft wird. Im ersten Teilschritt 56.1 wird von der Steuer- und Regeleinheit 26 der Energiesendevorrichtung 14 ein Synchronisations-Impuls erzeugt und vorzugsweise über die primärseitige Sendespule 22 und die sekundärseitige Empfangsspule an den Verbraucher 18 gesendet. Alternativ wäre für die Kommunikation zwischen Energiesendevorrichtung 14 und Verbraucher 18 auch eine andere drahtlose Datenübertragung, z.B. per Bluetooth, optisch, akustisch oder dergleichen, denkbar. Werden nach dem Synchronisations-Impuls die notwendigen Empfangsdaten "Rx Data" des Verbrauchers 18 im zweiten Teilschritt 56.2 durch die primärseitige Elektronikeinheit 24 der Energiesendevorrichtung 14 empfangen, kann die Kopplung zwischen Energiesendevorrichtung 14 und Verbraucher 18 im dritten Teilschritt 56.3 überprüft werden. Ist die Überprüfung der Kopplung und der Empfangsdaten erfolgreich, wird im vierten Teilschritt 56.4 entschieden, die drahtlose Energieübertragung zum Verbraucher 18 gemäß einem achten Schritt 58a zu starten. Ist sie dagegen nicht erfolgreich, wird von einem Fehler und/oder einem Fremdobjekt 32 in einem alternativen, achten Schritt 58c ausgegangen.

Liegt die Ist-Güte Q_{act,n+1}(fᵣₑₛ) zwischen der oberen und der unteren Grenze q_{tar_up}, q_{tar_lo} des zweiten Bereichs 36 gemäß Figur 2, wird davon ausgegangen, dass sich das drahtlose Energieübertragungssystem 10 in einem Standby-Betrieb befindet und kein Fremdobjekt 32 auf der drahtlosen Energiesendevorrichtung 14 liegt. Somit springt das Verfahren zur drahtlosen Energieübertragung ausgehend vom sechsten Schritt 52 direkt in einen weiteren alternativen, achten Schritt 58b.

Ergibt der Vergleich zwischen der Ist-Güte Q_{act,n+1}(fᵣₑₛ) und der Soll-Güte Qₜₐᵣ(fᵣₑₛ) im sechsten Schritt 52, dass die Ist-Güte Q_{act,n+1}(fᵣₑₛ) außerhalb des Soll-Gütebereichs qₜₐᵣ liegt, so wird gemäß der obigen Ausführungen zu Figur 2 in Schritt 58c ein Fehler und/oder ein vorhandenes Fremdobjekt 32 angenommen.

Ausgehend von den drei möglichen, achten Schritten 58a (Betrieb zur drahtlosen Energieübertragung), 58b (Standby-Betrieb), 58c (Fehler oder Fremdobjekt erkannt) wird in einem neunten Verfahrensschritt 60 entschieden, ob die eingestellte Zykluszeit T_{cycle} eine maximale Zykluszeit Tₘₐₓ von z.B. einer Sekunde überschritten hat. T_{cycle} definiert die Periodendauer zwischen zwei aufeinanderfolgenden Durchläufen des Verfahrens zur drahtlosen Energieübertragung. Die Schritte 46 bis 58 des Verfahrens zur drahtlosen Energieübertragung dauern dagegen in der Regel nur wenige Millisekunden und hängen maßgeblich von der Rechenleistung der primärseitigen Steuer- und Regeleinheit 26 ab. So lange die Zykluszeit T_{cycle} die maximale Zykluszeit Tₘₐₓ in dem neunten Schritt 60 noch nicht überschritten hat, wird sie in einen zehnten Schritt 62a sukzessive oder einmalig auf einen festgelegten Wert erhöht. Während des Durchlaufs der Schritte 60 und 62a ist das eigentliche Verfahren zur Betriebsarten- und/oder Fehler- bzw. Fremdobjekterkennung gemäß der Schritte 46 bis 58 bereits abgeschlossen, so dass abhängig von der in dem sechsten Schritt 54 vorgenommenen Entscheidung so lange die drahtlose Energieübertragung gemäß Schritt 58a, der Standby-Betrieb gemäß Schritt 58b oder eine Unterbrechung der Energieübertragung bzw. des Standby-Betriebs gemäß Schritt 58c erfolgt, bis T_{cycle} die maximale Zykluszeit Tₘₐₓ überschritten hat. Danach wird in Schritt 62b entschieden, ob das Verfahren wiederholt oder beendet werden soll. Im Falle einer Wiederholung, werden in einem elften Schritt 64 die bisher hinterlegte Ist-Güte Q_{act,n}(fᵣₑₛ) auf den Wert der aktuellen Ist-Güte Q_{act,n+1}(fᵣₑₛ) des zurückliegenden Zyklus und die Zykluszeit T_{cycle} auf den Minimalwert Tₘᵢₙ gesetzt. Danach beginnt das Verfahren mit dem dritten Schritt 46 und der Messung einer neuen Ist-Güte Q_{act,n+1}(fᵣₑₛ) erneut, wobei der nachfolgende Frequenzdurchlauf gemäß Schritt 50 ausgelassen wird, wenn sich bisher hinterlegte und neue Ist-Güte wegen Q_{act,n+1}(fᵣₑₛ) = Q_{act,n}(fᵣₑₛ) nicht unterscheiden.

Wurde im ersten Schritt 42 ein Fehler während des POST festgestellt oder wurde im elften Schritt 64 entschieden, den Zyklus nicht zu wiederholen, wird das Verfahren zur drahtlosen Energieübertragung mit dem abschließenden Schritt 66 gestoppt.

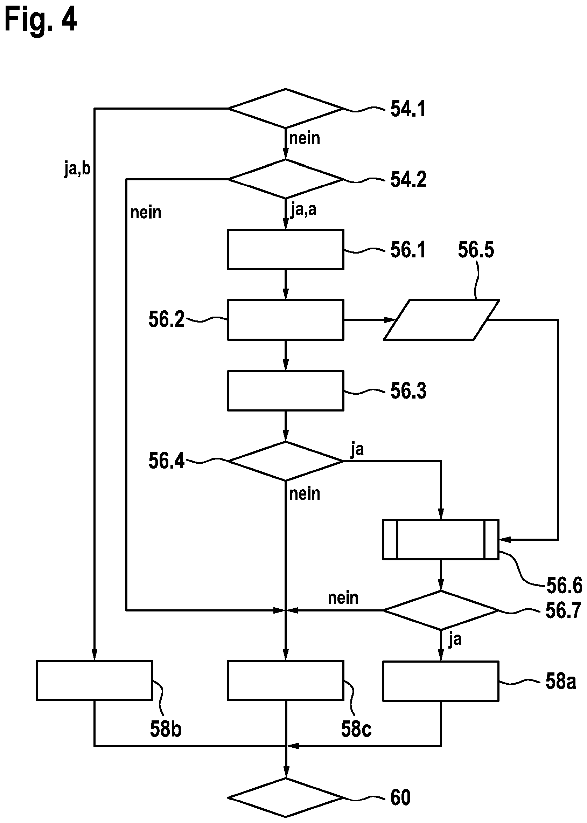

Eine besondere Bedeutung für das Verfahren zur drahtlosen Energieübertragung kommen die in dem zweiten Teilschritt 56.2 des Teilprozesses 56 empfangenen Daten "Rx Data" gemäß Figur 4 zu. Dabei stellt das in Figur 4 gezeigte Flussdiagramm lediglich einen Ausschnitt des in Figur 3 gezeigten Programmablaufplans dar, wobei identische Verfahrensschritte jeweils mit denselben Bezugszeichen versehen wurden und der siebte Verfahrensschritt 54 in zwei Teilschritte 54.1 und 54.2 zerlegt wurde.

Liegt die Ist-Güte Q_{act,n+1}(fᵣₑₛ) in Teilschritt 54.1 zwischen der oberen und der unteren Grenze q_{tar_up}, q_{tar_lo} des zweiten Bereichs 36 gemäß Figur 2, wird entsprechend Figur 3 davon ausgegangen, dass sich das drahtlose Energieübertragungssystem 10 in einem Standby-Betrieb befindet und kein Fremdobjekt 32 auf der drahtlosen Energiesendevorrichtung 14 liegt. Somit springt das Verfahren zur drahtlosen Energieübertragung ausgehend vom sechsten Schritt 52 direkt in den achten Schritt 58b. Liegt die Ist-Güte Q_{act,n+1}(fᵣₑₛ) in Teilschritt 54.1 dagegen außerhalb des zweiten Bereichs 36, wird in einem nachfolgenden Teilschritt 54.2 geprüft, ob sie zwischen der oberen und der unteren Grenze q_{tar_up}, q_{tar_lo} des ersten Bereichs 34 gemäß Figur 2 liegt. Ist dies nicht der Fall, wird in Schritt 58c von einem Fehler und/oder einem Fremdobjekt 32 ausgegangen. Entspricht die Ist-Güte Q_{act,n+1}(fᵣₑₛ) dagegen einer Soll-Güte Qₜₐᵣ(fᵣₑₛ) des ersten Bereichs 34, so wird in dem nachfolgenden Teilprozess 56 eine Kommunikation zum Verbraucher 18 aufgebaut.

In gegenüber Figur 3 zusätzlichen Teilschritten 56.5 und 56.6 ist vorgesehen, eine aus den empfangenen Daten des Verbrauchers 18 "Rx Data" und/oder in der Energiesendevorrichtung 14 sensierten Daten ableitbare Energieübertragungskenngröße für die nachfolgende Fremdobjekterkennung zu berücksichtigen. Die Energieübertragungskenngröße ist insbesondere eine Kenngröße, welche während der drahtlosen Energieübertragung einen Energie-fluss, im Falle der induktiven Energieübertragung insbesondere einen elektromagnetischen Energiefluss, zwischen der Energiesendevorrichtung 14 und dem Verbraucher 18 bevorzugt quantitativ, charakterisiert. So kann die Energieübertragungskenngröße eine zwischen der Energiesendevorrichtung 14 und dem Verbraucher 18 übertragene elektrische Leistung bzw. ein Leistungsgradient, eine Temperatur bzw. ein Temperaturgradient, ein benötigter Energiebedarf des Verbrauchers 18, ein Ladezustand des als wiederaufladbaren Energiespeichers ausgebildeten Verbrauchers 18, ein Gradient der erfassten Ist-Güte Q_{act,n+1}(fᵣₑₛ), eine in dem Verbraucher gemessene Vibration bzw. ein Vibrationsgradient und/oder eine Authentifizierungs-Information über die Berechtigung des Verbrauchers 18 zur drahtlosen Energieübertragung sein.

Alternativ oder ergänzend kann die Elektronikeinheit 24 der Energiesendevorrichtung 14 aber auch eine mit der Steuer- und Regeleinheit 26 verbundene Sensoreinheit 68 zur kontinuierlichen oder quasikontinuierlichen Erfassung der Energieübertragungskenngröße aufweisen. Dabei kann die Erfassung sowohl während der Fremdobjekterkennung als auch während der drahtlosen Energieübertragung, während des Standby-Betriebs oder auch während einer Unterbrechung der Energieübertragung infolge eines erkannten Fehlers und/oder Fremdobjekts erfolgen. Eine entsprechende Sensoreinheit 70 kann zusätzlich oder alternativ auch in dem Verbraucher 18 zur Erzeugung der obigen Empfangsdaten "Rx Data" erforderlich sein (vergleiche Figur 1). Die Sensorvorrichtung kann aus unterschiedlichsten Sensoren, wie einem Shuntwiderstand, einem Temperaturfühler, einem Beschleunigungssensor, einem Drehratensensor, aber auch einem Luftdruckmesser, einem Feuchtigkeitsmesser oder dergleichen bestehen. Da dem Fachmann entsprechende Sensoren hinlänglich bekannt sind, soll hierauf nicht weiter eingegangen werden. Bei der sensierten Energieübertragungskenngröße kann es sich somit um einen elektrischen Strom bzw. einen Stromgradienten in der Sendespule 22, eine an der Sendespule 22 anliegende elektrische Spannung bzw. einen Spannungsgradienten, eine Temperatur bzw. einen Temperaturgradienten der Sendespule 22, eine aufgenommene Leistung bzw. einen Leistungsgradienten eines Netzteils der Energiesendevorrichtung 14, eine Versorgungsspannung bzw. ein Versorgungsspannungsgradient des Netzteils der Energiesendevorrichtung 14 oder dergleichen handeln. Als Energieübertragungskenngröße kann auch eine gemessene Vibration bzw. ein Vibrationsgradient der Energiesendevorrichtung 14 in Frage kommen.

Ebenfalls ist es denkbar, die Energieübertragungskenngröße abhängig von einem Montageort der Energiesendevorrichtung 14, zum Beispiel stationär in einer Werkstatt oder mobil in einem Fahrzeug, auszugestalten. Der Montageort lässt sich beispielsweise anhand der gemessen Vibration bzw. des gemessenen Vibrationsgradienten der Energiesendevorrichtung 14 bestimmen. Ebenso können hierfür aber auch vorhandene Geschwindigkeits- und/oder GPS-Daten eines Fahrzeugs oder dergleichen herangezogen werden.

Zur Optimierung der Fremdobjekterkennung lassen sich mittels der Steuer- und/oder Regeleinheit 26 aus der Energieübertragungskenngröße verschiedene Parameter zur Regelung der Fremdobjekterkennung bestimmen. In zumindest einem Teilschritt 56.6 wird in Abhängigkeit von der zumindest einen Energieübertragungskenngröße zumindest eine Genauigkeitskenngröße, beispielsweise eine Anzahl diskreter Frequenzpunkte und/oder eine Anzahl an Frequenzdurchlauf-Zyklen (vergleiche Schritt 50 in Figur 3), der Fremdobjekterkennung bestimmt. Zudem kann eine Dauer und/oder Häufigkeit, insbesondere eine Frequenz, einer Ausführung der Fremdobjekterkennung während der drahtlosen Energieübertragung in Abhängigkeit von der zumindest einen Energieübertragungskenngröße bestimmt werden. So kann die Häufigkeit während der drahtlosen Energieübertragung mit einer mittleren Übertragungsleistung, beispielsweise einer Übertragungsleistung zwischen 5 W und 10 W, gegenüber einer Häufigkeit während einer drahtlosen Energieübertragung mit einer hohen Übertragungsleistung, beispielsweise einer Übertragungsleistung von mehr als 10 W, reduziert sein. Bei einer drahtlosen Energieübertragung mit einer geringen Übertragungsleistung kann eine Ausführung einer Fremdobjekterkennung vollständig unterlassen werden. Weiterhin kann in Teilschritt 56.6 in Abhängigkeit von der zumindest einen Energieübertragungskenngröße die maximale Zykluszeit Tₘₐₓ und/oder eine zeitliche Länge des in Schritt 50 durchzuführenden Frequenzdurchlaufs bestimmt werden.

Anhand der in Teilschritt 56.6 festgelegten Maßnahmen wird im abschließenden Teilschritt 56.7 entschieden, ob die Fremdobjekterkennung für eine definierte Zeitspanne bzw. für die restliche Energieübertragung deaktiviert werden kann und/oder ob die in Schritt 56.6 festgelegten Grenzwerte der für den Energieübertragungsvorgang erforderlichen Resonanzfrequenz fᵣₑₛ und Ist-Güte Q_{act,n+1}(fᵣₑₛ) eingehalten wurden. Ist dies der Fall und wurde die Fremdobjekterkennung fehlerlos durchlaufen, kann die Energie in Schritt 58a drahtlos von der Energiesendevorrichtung 14 auf den Verbraucher 18 übertragen werden. Wurde dagegen in Teilschritt 56.7 entschieden, dass die Grenzwerte überschritten wurden bzw. die Fremdobjekterkennung nicht ausgesetzt werden darf, so wird gemäß Schritt 58c auf ein Fehler oder ein vorhandenes Fremdobjekt 32 geschlossen, so dass bis zur Entscheidung über die Wiederholung des Zyklus in Schritt 62b keine weitere Energieübertragung erfolgt.

Die Energieübertragung wird durch die Steuer- und/oder Regeleinheit 26 der Energiesendevorrichtung 14 kontinuierlich in Abhängigkeit von der Zykluszeit T_{cycle} auf Unregelmäßigkeiten überprüft. Erkennt die Steuer- und/oder Regeleinheit 26 eine zeitliche Änderung, insbesondere eine Schwankungsamplitude und/oder einen Gradienten, der Energieübertragungskenngröße, wird die Energieübertragung unterbrochen und eine erneute Fremdobjekterkennung gemäß der in Figur 3 gezeigten Schritte 60 bis 64 initiiert.

In Abhängigkeit von einem Unterschreiten eines, insbesondere unteren, Grenzwerts durch einen Wert der Energieübertragungskenngröße wird die Fremdobjekterkennung in Teilschritt 56.7 für einen definierten Zeitraum oder bis zum Ende der Energieübertragung durch entsprechendes Erhöhen der maximalen Zykluszeit Tₘₐₓ in Teilschritt 56.6 ausgesetzt. In Abhängigkeit von einem Überschreiten eines, insbesondere oberen, Grenzwerts durch einen Wert der Energieübertragungskenngröße wird in Teilschritt 56.7 entschieden, die Fremdobjekterkennung weiterhin durchzuführen und/oder die maximale Zykluszeit Tₘₐₓ in Teilschritt 56.6 zu reduzieren. Insbesondere wird die Durchführung der Fremdobjekterkennung bei Unterschreiten eines unteren Grenzwerts einer Übertragungsleistung, beispielsweise bei einem Absinken der Übertragungsleistung auf einen Wert unterhalb von 5 W, ausgesetzt. Bei Überschreiten eines festgelegten Grenzwerts der Übertragungsleistung wird die Fremdobjekterkennung wieder eingesetzt.

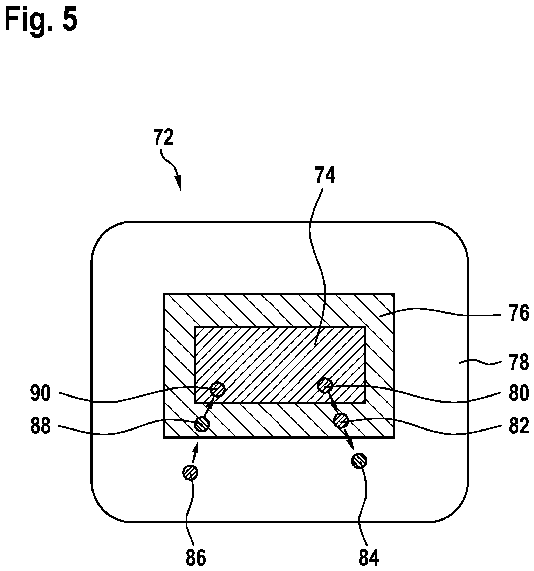

Eine weitere Möglichkeit zur Anpassung der Grenzwerte und zur Unterstützung über die Entscheidung einer in dem nächsten Zyklus durchzuführenden Fremdobjekterkennung in den Verfahrensschritten 56.6 und 56.7 bietet die Definition einer erfindungsgemäßen Hysterese 72 für die Grenzen der Resonanzfrequenz fᵣₑₛ und der Ist-Güte Q_{act,n+1}(fᵣₑₛ) gemäß Figur 5.

Dabei besteht die Hysterese 72 aus drei Hystereseregionen 74, 76, 78, für die jeweils unterschiedliche Grenzen der Resonanzfrequenz fᵣₑₛ und der Ist-Güte Q_{act,n+1}(fᵣₑₛ) gelten. So ist eine erste Hystereseregion 74 derart definiert, dass innerhalb ihrer Grenzen für die Resonanzfrequenz fᵣₑₛ und die Ist-Güte Q_{act,n+1}(fᵣₑₛ) keine Fremdobjekterkennung durchgeführt werden muss. Eine die erste Hystereseregion 74 umgebende bzw. an diese angrenzende, zweite Hystereseregion 76 ist derart definiert, dass innerhalb ihrer Grenzen für die Resonanzfrequenz fᵣₑₛ und die Ist-Güte Q_{act,n+1}(fᵣₑₛ) eine Fremdobjekterkennung in Abhängigkeit von einem Übergang von der ersten Hystereseregion 74 in die zweite Hystereseregion 76 oder von einer die zweite Hystereseregion 76 umgebenden bzw. an diese angrenzende, dritte Hystereseregion 78 in die zweite Hystereseregion 76 durchgeführt wird.

Das nachfolgende Beispiel soll die Entscheidungsgrundlage verdeutlichen. Wurden in einem Zyklus eine Ist-Güte Q_{act,n+1}(fᵣₑₛ) und/oder eine Resonanzfrequenz fᵣₑₛ ermittelt, deren Werte gemäß Figur 2 deutlich innerhalb der erlaubten Soll-Gütebereiche qₜₐᵣ (erster und zweiter Bereich 34, 36) mit den dort hinterlegten Soll-Güten Qₜₐᵣ(fᵣₑₛ) bzw. Soll-Resonanzfrequenzen fᵣₑₛ liegen, so befindet sich ein zugehöriger Werte-Punkt 80 in der ersten Hystereseregion 74. In den Verfahrensschritten 54, 54.1, 54.2 und/oder 56.7 gemäß der Figuren 3 und 4 kann also zweifelsfrei entschieden werden, für den nachfolgenden Zyklus keine Fremdobjekterkennung durchzuführen bzw. diese auszusetzen. Wird nun nachfolgend in Schritt 62b eine Wiederholung des Zyklus entschieden und in Schritt 46 eine Ist-Güte Q_{act,n+1}(fᵣₑₛ) ermittelt, die in den Grenzbereichen der erlaubten Soll-Gütebereiche qₜₐᵣ liegen, so befindet sich ein zugehöriger Werte-Punkt 82 in der zweiten Hystereseregion 76. Da ein Übergang von der ersten zur zweiten Hystereseregion erfolgte, wird in diesem Fall entschieden, keine Fremdobjekterkennung durchzuführen. Eine Fremdobjekterkennung wird erst wieder durchgeführt, wenn sich im anschließenden Zyklus ein Werte-Punkt 84 ergibt, der in der dritten Hystereseregion 78 liegt.

Umgekehrt wird ausgehend von einem Werte-Punkt 86 in der dritten Hystereseregion 78 eine Fremdobjekterkennung im nächsten Zyklus durchgeführt, selbst wenn ein nachfolgend erfasster Werte-Punkt 88 in der zweiten Hystereseregion 76 liegt. Die Fremdobjekterkennung wird erst wieder ausgesetzt, wenn nachfolgend ein Übergang von der zweiten Hystereseregion 76 in die erste Hystereseregion 74 auf den dortigen Werte-Punkt 90 erfolgt.

Somit kann in den Grenzbereichen der Soll-Gütebereiche qₜₐᵣ in Abhängigkeit von der Übergangsrichtung die Durchführung der Fremdobjekterkennung derart entschieden werden, dass je nach Ausgangslage die Energieübertragung beschleunigt oder die Sicherheit durch entsprechendes Erkennen von Fehlern und/oder Fremdobjekten 32 verbessert wird. Die Hysterese 72 ist demnach maßgeblich durch die zweite Hystereseregion 76 definiert. Ist keine zweite Hystereseregion 76 vorhanden, so dass die erste und die dritte Hystereseregion 74 bzw. 78 unmittelbar aneinandergrenzen, existiert auch kein Hystereseverhalten mehr. Je größer die zweite Hystereseregion 76 gewählt wird, desto seltener wird bei Veränderungen der Ist-Güte Q_{act,n+1}(fᵣₑₛ) und/oder der Resonanzfrequenz fᵣₑₛ die Entscheidung zur Durchführung der Fremdobjekterkennung geändert, desto ungenauer kann aber auch das Verhalten der Fremdobjekterkennung sein.

Die Hysterese 72 bzw. die zweite Hystereseregion 76 kann abhängig von einem Betriebsmodus der Energiesendevorrichtung und/oder einem Betriebsmodus-Wechsel der Energiesendevorrichtung angepasst werden. So ist es möglich, die Hysterese 72 bzw. die zweite Hystereseregion 76 in einem Energieübertragungsbetrieb der Energiesendevorrichtung gegenüber einem Standby-Betrieb zu verringern, um eine größere Entscheidungsgenauigkeit bei etwaigen Übergängen entsprechender Werte-Punkte von einem zum nächsten Zyklus zu erzielen und etwaige Fremdobjekte 32 schneller erkennen zu können.

Die Hysterese 72 bzw. mindestens eine der Hystereseregionen 47, 76, 78 kann analog zu der zuvor beschriebenen Fremdobjekterkennung ebenfalls abhängig von der in den Teilschritten 56.5 und 56.6 ermittelten Energieübertragungskenngröße der drahtlosen Energieübertragung (vergleiche Figur 4) angepasst werden. Dies gestattet eine flexiblere Durchführung der Fremdobjekterkennung. So kann die Energieübertragungskenngröße eine in der Energiesendevorrichtung und/oder dem Verbraucher gemessene Vibration bzw. ein Vibrationsgradient, eine Geschwindigkeit und/oder eine Beschleunigung sein. Nimmt die Vibration, die Geschwindigkeit, die Beschleunigung und/oder der Vibrationsgradienten zu, wird die Hysterese 72 bzw. die zweite Hystereseregion 76 vergrößert, um zu häufige Wechsel zwischen einer aktivierten und einer deaktivierten Fremdobjekterkennung von einem zum nächsten Zyklus zu reduzieren. Ein mögliches Szenario für eine derartige Anpassung der Hysterese 72 ist z.B. ein induktiver Ladevorgang für einen Akkupack einer Handwerkzeugmaschine in einem fahrenden Fahrzeug.

Alternativ oder ergänzend kann die Energieübertragungskenngröße eine zwischen der Energiesendevorrichtung und dem Verbraucher übertragene elektrische Leistung bzw. ein Leistungsgradient ist, wobei die Hysterese 72 bzw. die zweite Hystereseregion 76 mit steigender Leistung bzw. steigendem Leistungsgradienten verringert wird, um die Entscheidungsgenauigkeit für die Fremdobjekterkennung zu erhöhen.

Auch ist denkbar, dass die Energieübertragungskenngröße eine Temperatur bzw. ein Temperaturgradient ist, wobei die Hysterese bzw. die zumindest eine Hystereseregion mit steigender Temperatur bzw. steigendem Temperaturgradienten verringert wird, um die Entscheidungsgenauigkeit für die Fremdobjekterkennung zu erhöhen.

Eine weitere Alternative kann eine als ein benötigter Energiebedarf des Verbrauchers und/oder ein Ladezustand des als wiederaufladbaren Energiespeicher ausgebildeten Verbrauchers ausgebildete Energieübertragungskenngröße sein. Dabei wird die Hysterese bzw. die zumindest eine Hystereseregion bei größerem Energiebedarf verringert und mit zunehmendem Ladezustand vergrößert.

Es sei abschließend noch darauf hingewiesen, dass das gezeigte Ausführungsbeispiele weder auf die Figuren 1 bis 5 noch auf die genannten Leistungs- und Spannungswerte beschränkt ist. Insbesondere kann die Erfindung auch bei drahtlosen Energieübertragungen mit Übertragungsleistungen von deutlich mehr als 10 W, beispielsweise für Anwendungen in Küchen oder Elektrofahrzeugen, zum Einsatz kommen.

## Patentansprüche

1. Verfahren zur drahtlosen, insbesondere induktiven, Energieübertragung von einer Energiesendevorrichtung (14) zu einem Verbraucher (18), wobei in zumindest einem Verfahrensschritt (46, 50) zumindest eine Resonanzfrequenz (fᵣₑₛ) und eine Ist-Güte (Q_{act,n+1}(fᵣₑₛ)) als ein Werte-Punkt (80, 82, 84, 86, 88, 90) der drahtlosen Energieübertragung erfasst werden und in zumindest einem weiteren Verfahrensschritt (54, 56) eine Entscheidung zur Unterbrechung der Energieübertragung von der Energiesendevorrichtung (14) zu dem Verbraucher (18) für eine Fremdobjekterkennung erfolgt, **dadurch gekennzeichnet, dass** der Entscheidung zur Durchführung der Fremdobjekterkennung eine Hysterese (72) für die Grenzen der Resonanzfrequenz (fᵣₑₛ) und der Ist-Güte (Q_{act,n+1}(fᵣₑₛ)) derart zugrunde liegt, dass die Hysterese (72) aus zumindest drei Hystereseregionen (74, 76, 78) für die Grenzen der Resonanzfrequenz (fᵣₑₛ) und der Ist-Güte (Q_{act,n+1}(fᵣₑₛ)) besteht und dass nach Ablauf einer Zykluszeit (T_{cycle}) im weiteren Verfahrensschritt (54, 56) ermittelt wird, in welcher Hystereseregion (74, 76, 78) der Werte-Punkt (80, 82, 84, 86, 88, 90) liegt.

2. Verfahren nach Anspruch 1, **dadurch gekennzeichnet, dass** eine erste Hystereseregion (74) derart definiert ist, dass innerhalb ihrer Grenzen für die Resonanzfrequenz (fᵣₑₛ) und die Ist-Güte (Q_{act,n+dr1}(fᵣₑₛ)) keine Fremdobjekterkennung durchgeführt werden muss.

3. Verfahren nach Anspruch 2, **dadurch gekennzeichnet, dass** eine zweite Hystereseregion (76) derart definiert ist, dass innerhalb ihrer Grenzen für die Resonanzfrequenz (fᵣₑₛ) und die Ist-Güte (Q_{act,n+1}(fᵣₑₛ)) eine Fremdobjekterkennung in Abhängigkeit von einem Übergang von der ersten Hystereseregion (74) in die zweite Hystereseregion (76) oder von einer dritten Hystereseregion (78) in die zweite Hystereseregion (76) durchgeführt wird.

4. Verfahren nach einem der vorherigen Ansprüche, **dadurch gekennzeichnet, dass** die Hysterese (72) bzw. mindestens eine der Hystereseregionen (76) abhängig von einem Betriebsmodus der Energiesendevorrichtung (14) und/oder einem Betriebsmodus-Wechsel der Energiesendevorrichtung (14) angepasst wird.

5. Verfahren nach Anspruch 4, **dadurch gekennzeichnet, dass** die Hysterese (72) bzw. die zumindest eine Hystereseregion (76) in einem Energieübertragungsbetrieb der Energiesendevorrichtung (14) gegenüber einem Standby-Betrieb verringert ist.

6. Verfahren nach einem der vorherigen Ansprüche, **dadurch gekennzeichnet, dass** die Hysterese (72) bzw. mindestens eine der Hystereseregionen (76) abhängig von einer Energieübertragungskenngröße der drahtlosen Energieübertragung angepasst wird.

7. Verfahren nach Anspruch 6, **dadurch gekennzeichnet, dass** die Energieübertragungskenngröße eine in der Energiesendevorrichtung (14) und/oder dem Verbraucher (18) gemessene Vibration bzw. ein Vibrationsgradient, eine Geschwindigkeit und/oder eine Beschleunigung ist, wobei die Hysterese (72) bzw. die zumindest eine Hystereseregion (76) mit steigender Vibration, Geschwindigkeit, Beschleunigung und/oder steigendem Vibrationsgradienten vergrößert wird.

8. Verfahren nach einem der vorhergehenden Ansprüche 6 oder 7, **dadurch gekennzeichnet, dass** die Energieübertragungskenngröße eine zwischen der Energiesendevorrichtung (14) und dem Verbraucher (18) übertragene elektrische Leistung bzw. ein Leistungsgradient ist, wobei die Hysterese (72) bzw. die zumindest eine Hystereseregion (76) mit steigender Leistung bzw. steigendem Leistungsgradienten verringert wird.

9. Verfahren nach einem der vorhergehenden Ansprüche 6 bis 8, **dadurch gekennzeichnet, dass** die Energieübertragungskenngröße eine Temperatur bzw. ein Temperaturgradient ist, wobei die Hysterese (72) bzw. die zumindest eine Hystereseregion (76) mit steigender Temperatur bzw. steigendem Temperaturgradienten verringert wird.

10. Verfahren nach einem der vorhergehenden Ansprüche 6 bis 9, **dadurch gekennzeichnet, dass** die Energieübertragungskenngröße ein benötigter Energiebedarf des Verbrauchers (18) und/oder ein Ladezustand des als wiederaufladbaren Energiespeicher ausgebildeten Verbrauchers (18) ist, wobei die Hysterese (72) bzw. die zumindest eine Hystereseregion (76) bei größerem Energiebedarf verringert und mit zunehmendem Ladezustand vergrößert wird.

11. Drahtlose Energiesendevorrichtung (14) zur Durchführung des Verfahrens nach einem der vorhergehenden Ansprüche 1 bis 10, **dadurch gekennzeichnet, dass** die drahtlose Energiesendevorrichtung (14) für einen Leistungsbereich der drahtlos zu übertragenen Energie innerhalb einer unteren Leistungsgrenze von 5 W und einer oberen Leistungsgrenze von 30 W, insbesondere 15 W, ausgelegt ist.

12. Drahtlose Energiesendevorrichtung (14) zur Durchführung des Verfahrens nach einem der vorhergehenden Ansprüche 1 bis 10, **dadurch gekennzeichnet, dass** die drahtlose Energiesendevorrichtung (14) für einen Leistungsbereich der drahtlos zu übertragenen Energie innerhalb einer unteren Leistungsgrenze von 30 W und einer oberen Leistungsgrenze von 200 W, insbesondere 65 W, ausgelegt ist.

13. Drahtlose Energiesendevorrichtung (14) zur Durchführung des Verfahrens nach einem der vorhergehenden Ansprüche 1 bis 10, **dadurch gekennzeichnet, dass** die drahtlose Energiesendevorrichtung (14) für einen Leistungsbereich der drahtlos zu übertragenen Energie oberhalb einer unteren Leistungsgrenze von 200 W, insbesondere 2000 W, ausgelegt ist.

## Claims

1. Method for wirelessly, in particular inductively, transmitting energy from an energy transmitting device (14) to a load (18), wherein at least one method step (46, 50) comprises capturing at least one resonant frequency (fᵣₑₛ) and an actual quality (Q_{act,n+1}(fᵣₑₛ)) as a value point (80, 82, 84, 86, 88, 90) of the wireless energy transmission and at least one further method step (54, 56) comprises making a decision to interrupt the energy transmission from the energy transmitting device (14) to the load (18) for a foreign object detection, **characterized in that** the decision to perform the foreign object detection is based on a hysteresis (72) for the limits of the resonant frequency (fᵣₑₛ) and the actual quality (Q_{act,n+1}(fᵣₑₛ)) in such a way that the hysteresis (72) consists of at least three hysteresis regions (74, 76, 78) for the limits of the resonant frequency (fᵣₑₛ) and the actual quality (Q_{act,n+1}(fᵣₑₛ)), and **in that** after a cycle time (T_{cycle}) has elapsed the further method step (54, 56) comprises determining in which hysteresis region (74, 76, 78) the value point (80, 82, 84, 86, 88, 90) lies.

2. Method according to Claim 1, **characterized in that** a first hysteresis region (74) is defined in such a way that no foreign object detection needs to be performed within the limits of said region for the resonant frequency (fᵣₑₛ) and the actual quality (Q_{act,n+dr1}(fᵣₑₛ)).

3. Method according to Claim 2, **characterized in that** a second hysteresis region (76) is defined in such a way that a foreign object detection is performed within the limits of said region for the resonant frequency (fᵣₑₛ) and the actual quality (Q_{act,n+1}(fᵣₑₛ)) on the basis of a transition from the first hysteresis region (74) to the second hysteresis region (76) or from a third hysteresis region (78) to the second hysteresis region (76) .

4. Method according to one of the preceding claims, **characterized in that** the hysteresis (72), or at least one of the hysteresis regions (76), is adapted on the basis of an operating mode of the energy transmitting device (14) and/or a change of operating mode of the energy transmitting device (14).

5. Method according to Claim 4, **characterized in that** the hysteresis (72), or the at least one hysteresis region (76), is decreased in an energy transmission mode of the energy transmitting device (14) compared to a standby mode.

6. Method according to one of the preceding claims, **characterized in that** the hysteresis (72), or at least one of the hysteresis regions (76), is adapted on the basis of an energy transmission parameter of the wireless energy transmission.

7. Method according to Claim 6, **characterized in that** the energy transmission parameter is a vibration, or a vibration gradient, a velocity and/or an acceleration, measured in the energy transmitting device (14) and/or the load (18), wherein the hysteresis (72), or the at least one hysteresis region (76), is increased as the vibration, velocity, acceleration and/or vibration gradient increases.

8. Method according to either of the preceding Claims 6 and 7, **characterized in that** the energy transmission parameter is an electrical power, or a power gradient, transmitted between the energy transmitting device (14) and the load (18), wherein the hysteresis (72), or the at least one hysteresis region (76), is decreased as the power, or power gradient, increases.

9. Method according to one of the preceding Claims 6 to 8, **characterized in that** the energy transmission parameter is a temperature, or a temperature gradient, wherein the hysteresis (72), or the at least one hysteresis region (76), is decreased as the temperature, or temperature gradient, increases.

10. Method according to one of the preceding Claims 6 to 9, **characterized in that** the energy transmission parameter is an energy requirement of the load (18) and/or a state of charge of the load (18), which is in the form of a rechargeable energy store, wherein the hysteresis (72), or the at least one hysteresis region (76), is decreased for a greater energy requirement and increased as the state of charge increases.

11. Wireless energy transmitting device (14) for carrying out the method according to one of the preceding Claims 1 to 10, **characterized in that** the wireless energy transmitting device (14) is designed for a power range of the energy to be wirelessly transmitted within a lower power limit of 5 W and an upper power limit of 30 W, in particular 15 W.

12. Wireless energy transmitting device (14) for carrying out the method according to one of the preceding Claims 1 to 10, **characterized in that** the wireless energy transmitting device (14) is designed for a power range of the energy to be wirelessly transmitted within a lower power limit of 30 W and an upper power limit of 200 W, in particular 65 W.

13. Wireless energy transmitting device (14) for carrying out the method according to one of the preceding Claims 1 to 10, **characterized in that** the wireless energy transmitting device (14) is designed for a power range of the energy to be wirelessly transmitted above a lower power limit of 200 W, in particular 2000 W.

## Revendications

1. Procédé de transmission d'énergie sans fil, notamment par induction, d'un dispositif d'émission d'énergie (14) à un consommateur (18), au moins une fréquence de résonance (fᵣₑₛ) et une qualité réelle (Q_{act,n+1}(fᵣₑₛ)) étant détectée dans au moins une étape de procédé (46, 50) comme point de valeur (80, 82, 84, 86, 88, 90) de la transmission d'énergie sans fil et une décision étant prise, dans au moins une autre étape de procédé (54, 56), pour interrompre la transmission d'énergie du dispositif d'émission d'énergie (14) au consommateur (18) afin de détecter des objets étrangers, **caractérisé en ce que** la décision d'effectuer la détection d'objets étrangers est basée sur une hystérésis (72) pour les limites de la fréquence de résonance (fᵣₑₛ) et de la qualité réelle (Q_{act,n+1}(fᵣₑₛ)) de manière à ce que l'hystérésis (72) comprenne au moins trois zones d'hystérésis (74, 76, 78) pour les limites de la fréquence de résonance (fᵣₑₛ) et de la qualité réelle (Q_{act,n+1}(fᵣₑₛ)) et à ce que, après qu'un temps de cycle (T_{cycle}) s'est écoulé, soit effectuée dans une autre étape de procédé (54, 56) une détermination quant à quelle zone d'hystérésis (74, 76, 78) dans le point de valeur (80, 82, 84, 86, 88, 90) est situé.

2. Procédé selon la revendication 1, **caractérisé en ce qu'**une première zone d'hystérésis (74) est définie de manière à ce qu'aucune détection d'objets étrangers ne doive être effectuée dans ses limites pour la fréquence de résonance (fᵣₑₛ) et la qualité réelle (Q_{act,n+dr1}(fᵣₑₛ)).

3. Procédé selon la revendication 2, **caractérisé en ce qu'**une deuxième zone d'hystérésis (76) est définie de manière à ce qu'une détection d'objets étrangers soit effectuée, dans ses limites pour la fréquence de résonance (fᵣₑₛ) et la qualité réelle (Q_{act,n+1}(fᵣₑₛ)), en fonction d'une transition de la première zone d'hystérésis (74) à la deuxième zone d'hystérésis (76) ou d'une troisième zone d'hystérésis (78) à la deuxième zone d'hystérésis (76).

4. Procédé selon l'une des revendications précédentes, **caractérisé en ce que** l'hystérésis (72) ou au moins une des zones d'hystérésis (76) est adaptée en fonction d'un mode de fonctionnement du dispositif d'émission d'énergie (14) et/ou d'un changement de mode de fonctionnement du dispositif d'émission d'énergie (14) .

5. Procédé selon la revendication 4, **caractérisé en ce que** l'hystérésis (72) ou l'au moins une zone d'hystérésis (76) est réduite par rapport à un mode veille lorsque le dispositif d'émission d'énergie (14) est en mode de transmission d'énergie.

6. Procédé selon l'une des revendications précédentes, **caractérisé en ce que** l'hystérésis (72) ou au moins une des zones d'hystérésis (76) est adaptée en fonction d'un paramètre de transmission d'énergie de la transmission d'énergie sans fil.

7. Procédé selon la revendication 6, **caractérisé en ce que** la grandeur caractéristique de transmission d'énergie est une vibration ou un gradient de vibration, une vitesse et/ou une accélération mesurés dans le dispositif d'émission d'énergie (14) et/ou le consommateur (18), l'hystérésis (72) ou l'au moins une zone d'hystérésis (76) augmentant à mesure que la vibration, la vitesse, l'accélération et/ou le gradient de vibration augmentent.

8. Procédé selon l'une des revendications précédentes 6 et 7, **caractérisé en ce que** la grandeur caractéristique de transmission d'énergie est une puissance électrique ou un gradient de puissance transmis entre le dispositif d'émission d'énergie (14) et le consommateur (18), l'hystérésis (72) ou l'au moins une zone d'hystérésis (76) étant réduite à mesure que la puissance ou le gradient de puissance augmente.

9. Procédé selon l'une des revendications précédentes 6 à 8, **caractérisé en ce que** la grandeur caractéristique de transfert d'énergie est une température ou un gradient de température, l'hystérésis (72) ou l'au moins une zone d'hystérésis (76) étant réduite à mesure que la température ou le gradient de température augmente.

10. Procédé selon l'une des revendications précédentes 6 à 9, **caractérisé en ce que** la grandeur caractéristique de transmission d'énergie est un besoin en énergie requis du consommateur (18) et/ou un état de charge du consommateur (18) conçu comme un accumulateur d'énergie rechargeable, l'hystérésis (72) ou l'au moins une zone d'hystérésis (76) étant réduite lorsqu'il y a un plus grand besoin d'énergie et étant augmentée à mesure que l'état de charge augmente.

11. Dispositif d'émission d'énergie sans fil (14) destiné à mettre en œuvre le procédé selon l'une des revendications précédentes 1 à 10, **caractérisé en ce que** le dispositif d'émission d'énergie sans fil (14) est conçu pour une zone de puissance de l'énergie transmise sans fil dans une limite de puissance inférieure de 5 W et une limite de puissance supérieure de 30 W, en particulier de 15 W.

12. Dispositif d'émission d'énergie sans fil (14) destiné à mettre en œuvre le procédé selon l'une des revendications précédentes 1 à 10, **caractérisé en ce que** le dispositif d'émission d'énergie sans fil (14) est conçu pour une zone de puissance d'énergie transmise sans fil dans une limite de puissance inférieure de 30 W et une limite de puissance supérieure de 200 W, en particulier de 65 W.

13. Dispositif d'émission d'énergie sans fil (14) destiné à mettre en œuvre le procédé selon l'une des revendications précédentes 1 à 10, **caractérisé en ce que** le dispositif d'émission d'énergie sans fil (14) est conçu pour une zone de puissance d'énergie à transmettre sans fil au-dessus d'une limite de puissance inférieure de 200 W, en particulier de 2000 W.
